# FASCICULE DE BREVET EUROPEEN

(11) **EP 0 738 536 B1**
(45) Date de publication et mention de la délivrance du brevet: **20.02.2002**
(21) Numéro de dépôt: 96400800.7
(22) Date de dépôt: 15.04.1996
(51) Int. Cl.: B01D 53/14

(54) **Procédé et dispositif d'élimination d'au moins un gaz acide par un solvant, pour l'épuration du gaz naturel**
Verfahren und Vorrichtung zum Entfernen von Sauergas mittels eines Lösungsmittels, zur Reinigung von Erdgas
Process and apparatus for eliminating acid gas using a solvent, for the purification of natural gas

(30) Priorité: 19.04.1995 FR 9504778
(43) Date de publication de la demande: 23.10.1996
(73) Titulaire: INSTITUT FRANCAIS DU PETROLE, 92502 Rueil-Malmaison (FR)
(72) Inventeur: Minkkinen, Ari, 78860 Saint Nom La Breteche (FR); Capron, Pierre, 54150 Briey (FR); Larue, Joseph, 92500 Rueil Malmaison (FR)

(56) Documents cités:
- EP-A- 0 362 023
- EP-A- 0 528 709
- FR-A- 2 479 701
- US-A- 4 149 857
- US-A- 4 444 571

## Description

L'invention concerne un procédé de traitement d'une charge gazeuse hydrocarbonée contenant de l'hydrogène sulfuré ou contenant de l'hydrogène sulfuré et du dioxyde de carbone. Elle concerne aussi un dispositif pour la mise en oeuvre du procédé.

Ce procédé peut s'appliquer à des charges gazeuses hydrotraitées ne contenant sensiblement plus de dioxyde de carbone.

Ce procédé s'applique en particulier au traitement du gaz naturel contenant une quantité substantielle d'hydrogène sulfuré et de dioxyde de carbone et a fortiori lorsqu'un traitement préliminaire a permis d'en éliminer une majeure partie. Ces gaz acides concentrés lors de ce prétraitement peuvent être réinjectés dans le puits, ce qui est décrit dans la demande de brevet français EP-A-0665046.
Pour pouvoir vendre un gaz contenant moins de 3 ppm en volume d'hydrogène sulfuré, on doit mettre en oeuvre des techniques de séparation qui doivent être sélectives vis à vis de ce poison, puisque l'élimination simultanée de dioxyde de carbone et d'hydrogène sulfuré ne nécessite pas les mêmes contraintes de pureté. En effet, 2 à 4 % en volume de CO₂ sont tolérés dans le gaz destiné à la vente. Cet objectif peut être atteint par un procédé mettant en oeuvre deux étapes, une étape de réduction partielle de la teneur en acides par un procédé de séparation par membranes, suivie d'une étape de lavage du gaz ainsi en partie purifié, par un solvant ou une amine sélective. Il est en effet connu, que des membranes sélectives laissent diffuser H₂S et CO₂ plus facilement que les hydrocarbures (méthane notamment) contenus dans le gaz naturel. Ce procédé, a priori simple, présente cependant de sérieux inconvénients, notamment quand le gaz acide riche en H₂S doit être réinjecté dans le réservoir, à haute pression.

Le principal inconvénient d'un prétraitement par perméation sur membrane réside dans le fait que le perméat riche en H₂S et en CO₂ doit être récupéré en aval de la membrane sous une très faible pression pour que le procédé devienne efficace. Il s'en suit que, si le gaz n'est ni brûlé à la torche, ni envoyé dans une unité de récupération du soufre, il devient impératif de le recomprimer à la pression du réservoir, ce qui entraîne un coût de compression élevé et une consommation d'énergie importante.

Un second inconvénient du procédé de perméation sur membrane provient du fait que cette membrane n'est pas parfaitement sélective aux gaz acides puisqu'elle permet une diffusion considérable du méthane dans le perméat. La perte en méthane commercialisable peut représenter 10 à 15 % de la charge introduite.

Il a été proposé un procédé décrit dans le brevet FR 2605 241, qui traite un gaz contenant des hydrocarbures, CO₂ et H₂S par un solvant préalablement réfrigéré, par exemple le méthanol en présence d'eau. Le principe repose sur l'absorption des gaz acides par ce solvant.
Le contact s'effectue à basse température dans une colonne d'absorption et le solvant est ensuite régénéré à chaud, à basse pression dans un régénérateur qui est une colonne de distillation. En faisant varier le taux de solvant dans la colonne d'absorption, on peut obtenir un gaz épuré aux spécifications voulues.

Cependant le solvant coabsorbe une quantité substantielle d'hydrocarbures et les gaz acides libérés après la régénération contiennent beaucoup trop d'hydrocarbures et de CO₂ pour que ces gaz puissent être utilisés en tant que charge dans une unité Claus de récupération du soufre et donc pour que H₂S puisse être totalement éliminé sous forme de soufre élémentaire.
Par ailleurs, le besoin en énergie nécessaire à la réfrigération pour condenser le solvant contenu dans l'effluent de tête de la colonne de distillation (régénération), qui sert de reflux, est alors beaucoup plus important. Enfin, une perte de production de gaz est observée.

L'art antérieur est par ailleurs illustré par les brevets EP-A-0528 709, EP-A-0362 023, US-A-414 9857, FR-A-2 479 701 et US-A- 444 4571.

Un objet de l'invention est de remédier aux inconvénients mentionnés ci-devant, de façon à pouvoir traiter le gaz acide en sortie de la colonne de réfrigération par une unité Claus.
Un autre objet de l'invention est de valoriser au mieux le gaz acide contenu dans le solvant.
On a constaté qu'en faisant circuler la phase solvant récupérée de l'absorbeur dans au moins une zone de séparation à une pression inférieure à la pression de l'absorbeur, on pouvait vaporiser les hydrocarbures et donc en récupérer la majeure partie, comme fuel gaz avant de régénérer la phase solvant.

Plus précisément, l'invention concerne un procédé de traitement d'une charge gazeuse contenant un mélange d'hydrocarbures, de l'hydrogène sulfuré et éventuellement du dioxyde de carbone qui comporte:
- une étape a) de mise en contact de la charge à une pression P₂ avec une partie au moins d'une phase solvant polaire recyclée renfermant au moins 50 % d'un solvant dans au moins une zone (2) d'absorption, le dit solvant étant un composé organique non-hydrocarbure normalement liquide autre que l'eau, le dit solvant étant au moins partiellement miscible à l'eau et distillable à une température inférieure à celle de distillation de l'eau, de manière à obtenir un gaz épuré contenant la majeure partie des hydrocarbures et ne contenant sensiblement pas d'hydrogène sulfuré et une première phase liquide comprenant le solvant, les hydrocarbures restants, sensiblement tout l'hydrogène sulfuré et éventuellement sensiblement tout le dioxyde de carbone;
- une étape (b), dans laquelle on détend et on chauffe la première phase liquide à une pression P₁₂ inférieure à la pression P₂ dans au moins une colonne-échangeur thermique (12) verticale ou inclinée, qui échange indirectement dans sa partie interne à contre-courant de la chaleur avec la phase solvant régénérée et chauffée provenant de l'étape (c) ci-dessous, et dans laquelle l'on récupère en tête une deuxième phase gazeuse contenant sensiblement tous les hydrocarbures restants et la majeure partie du dioxyde de carbone, si la charge gazeuse en contient, et en fond une deuxième phase liquide chauffée contenant le solvant, la majeure partie de l'hydrogène sulfuré et éventuellement une mineure partie du dioxyde de carbone;
- une étape c) de régénération de la phase solvant, dans laquelle on effectue la régénération de la phase solvant en faisant circuler la deuxième phase liquide, après l'avoir éventuellement détendue, dans au moins une colonne de distillation (18) à une pression P₁₈ au plus égale à la pression P₁₂ du séparateur-échangeur thermique (12), et dans laquelle l'on récupère d'une part, en tête, une partie au moins d'une troisième phase gazeuse acide contenant la majeure partie de l'hydrogène sulfuré et éventuellement le dioxyde de carbone restant, et en fond de colonne, la phase solvant régénérée et chauffée;
- une étape d) de recyclage et de réfrigération de la phase solvant régénérée dans la zone d'absorption (2);
le procédé comportant en outre la réfrigération dans la partie interne de la colonne-échangeur thermique de la phase solvant régénérée et chauffée et la récupération de la phase solvant que l'on recycle sous pression dans la zone d'absorption (2) après l'avoir réfrigérée selon l'étape d).

En régénérant la phase solvant à haute température, après l'avoir débarrassée des hydrocarbures, on récupère un gaz acide contenant essentiellement de l'hydrogène sulfuré que l'on peut éliminer en l'introduisant dans une unité Claus de traitement d'effluents gazeux soufrés.

Il peut être avantageux de réaliser, avant l'étape b) de détente et de chauffage de la première phase liquide contenant le solvant, les hydrocarbures restants, sensiblement tout l'hydrogène sulfuré et sensiblement tout le dioxyde de carbone s'il y en a dans la charge, une détente préliminaire de la première phase liquide à une pression P₆ inférieure à la pression P₂ de la zone d'absorption dans au moins un séparateur intermédiaire (6) et l'on récupère en tête une phase gazeuse intermédiaire, dite gaz de flash comprenant essentiellement des hydrocarbures, une quantité mineure d'hydrogène sulfuré et éventuellement du dioxyde de carbone et en fond une phase liquide contenant le solvant, éventuellement la majeure partie du dioxyde de carbone et sensiblement tout l'hydrogène sulfuré que l'on traite selon l'étape b).

Cette étape préliminaire de détente est en général une simple détente réalisée par exemple par une vanne de contrôle de niveau ou une turbine de détente dans un séparateur intermédiaire conventionnel, dans lequel on récupère une fraction gazeuse, sensiblement sèche (gaz de flash) contenant environ 50 % poids par exemple d'hydrocarbures par rapport à ladite fraction et ayant une bonne qualité de fuel gaz.

Avantageusement, on peut faire circuler soit la phase gazeuse provenant de la colonne-échangeur, soit le gaz de flash soit le mélange des deux dans un séparateur à membrane pour récupérer un rétentat enrichi en hydrocarbures ne contenant que quelques traces d'hydrogène sulfuré et un perméat acide enrichi en H₂S et éventuellement en CO₂ (de l'ordre de quelques pour-cent par exemple).

De manière générale la détente de la première phase liquide avec ou sans séparateur intermédiaire est réalisée par au moins une vanne de détente ou une turbine de détente à une pression telle que l'on minimise la quantité d'hydrogène sulfuré dans l'effluent gazeux de tête du séparateur aval.

Selon une première variante de réalisation de l'invention, la pression P₁₂ dans la colonne-échangeur thermique peut être au plus égale à la pression P₆ dans le séparateur intermédiaire.

Selon une autre variante, elle peut être supérieure à la pression P₆ dans le séparateur intermédiaire, tout en demeurant inférieure à la pression P₂ dans la zone d'absorption. Dans ce cas là, il est nécessaire d'ajouter une pompe sur la ligne de transfert.

Selon l'une ou l'autre de ces variantes, il est nécessaire soit de détendre soit d'augmenter le niveau de pression de la phase liquide par une pompe.

Selon une autre caractéristique de l'invention, la pression P₆ dans le séparateur intermédiaire peut être avantageusement comprise entre 10 et 50 bar, et de préférence entre 15 et 30 bar.

Selon une autre caractéristique de l'invention, les conditions avantageuses d'utilisation de la colonne-échangeur thermique sont les suivantes :
- Pression (P₁₂): 8 à 40 bar, de préférence 10 à 20,
- Nombre d'étages théoriques : 5 à 15,
- Échangeur thermique à tubes et à calandre ou à plaques.

Selon une autre caractéristique de l'invention, les conditions avantageuses d'utilisation de la colonne de distillation (de régénération) de la phase solvant sont les suivantes :
- Pression (P₁₈) inférieure à la pression P₁₂ du séparateur-échangeur thermique, plus particulièrement inférieure à 15 bar et de préférence comprise entre 2 et 6 bar,
- Température en fond : 100 à 150°C,
- Nombre de plateaux théoriques 10 à 20 plateaux.

La phase solvant contient en général au moins 50 % et de préférence de 70 à 80 % d'au moins un solvant, le reste étant de l'eau. Ce solvant est en général choisi dans le groupe formé par le méthanol, éthanol, méthylpropyléther, éthylpropyléther, dipropyléther, méthyltertiobutyléther, diméthoxyméthane, méthoxyéthanol et propanol.

De préférence, on utilise le méthanol comme solvant.

Le taux de solvant préconisé est en général une fonction de la teneur en eau du solvant et surtout de la teneur en gaz acide. Il est avantageusement compris entre 0,8 et 3,5, ce qui est un bon compromis pour limiter la coabsorption des hydrocarbures et la consommation énergétique.

Le gaz à traiter est en règle générale introduit dans la zone d'absorption à une pression inférieure à 150 bar et à une température de +10 à -100°C. La pression partielle en hydrogène sulfuré et en dioxyde de carbone lorsqu'il en contient, ce qui est le cas pour le gaz naturel, est supérieure à 3 bar et de préférence supérieure à 10 bar.

Pour diminuer la teneur en H₂S de la phase gazeuse intermédiaire (gaz de flash) ou de la deuxième phase gazeuse, il est avantageux de réaliser une étape de lavage de la phase gazeuse avec une partie de la phase solvant régénérée et réfrigérée dans une zone de lavage contenant un garnissage approprié (éléments structurés par exemple) située en tête respectivement du séparateur intermédiaire ou de la colonne-échangeur thermique.

L'invention concerne aussi un dispositif de traitement d'une charge gazeuse contenant des hydrocarbures, de l'hydrogène sulfuré et éventuellement du dioxyde de carbone comportant au moins un absorbeur (2) contenant un garnissage ou des plateaux, une ligne (1) d'alimentation en la charge en fond de l'absorbeur et une ligne d'évacuation (4) d'une première phase liquide en fond de l'absorbeur, une ligne (5) d'évacuation de la charge épurée en tête de l'absorbeur et une ligne (22) d'alimentation d'une phase solvant en tête de l'absorbeur, le dispositif comprenant:
- au moins un moyen de détente (4a) disposé sur la ligne d'évacuation (4) de la première phase liquide en amont d'une colonne-échangeur thermique (12) décrite ci-après,
- au moins une colonne-échangeur thermique (12) à doubte chambre sensiblement verticale ou oblique ayant une entrée latérale supérieure reliée au moyen de détente (4a), comportant intérieurement des moyens d'échange thermique (16) indirect adaptés à refroidir une phase solvant régénérée dans une première chambre et à chauffer et séparer la première phase liquide dans une deuxième chambre, ladite colonne-échangeur thermique comportant en tête une ligne d'évacuation (13) d'une deuxième phase gazeuse enrichie en hydrocarbures et en fond une ligne d'évacuation (17) d'une deuxième phase liquide, lesdits moyens d'échange thermique (15) comportant une entrée latérale inférieure (14a) de phase de solvant régénéré et chaud dans la première chambre et une sortie latérale supérieure (22a) de phase de solvant régénéré et refroidi de ladite première chambre;
- au moins une colonne de distillation (18) ayant une entrée supérieure connectée à la ligne d'évacuation (17) de la deuxième phase liquide, une sortie supérieure délivrant une troisième phase gazeuse acide et une sortie inférieure délivrant la phase solvant régénérée, reliée à l'entrée latérale des moyens d'échange thermique; et
- au moins un moyen de recyclage (20,21) de la phase solvant régénérée en fond de la colonne de distillation (18) et au moins un moyen de réfrigération (24) de la phase solvant régénérée, connecté à la sortie latérale supérieure desdits moyens d'échange thermique (15) et à l'absorbeur (2),

Les moyens d'échange thermique dans la colonne-échangeur peuvent être un échangeur thermique à tubes et à calandre ou un échangeur à plaques verticales formant un réseau de canaux alternés, dans lequel on effectue simultanément un échange de chaleur et un transfert de matière. L'échange de chaleur entre la phase solvant régénérée et chaude qui circule de bas en haut dans la première chambre de l'échangeur thermique (la calandre par exemple) en se refroidissant et la phase solvant enrichie en hydrocarbures et en gaz acides qui circule de haut en bas dans la deuxième chambre de l'échangeur (tubes par exemple) en se réchauffant tout en étant mis en contact à contre-courant avec la phase vapeur générée, entraîne simultanément un transfert de matière entre ces deux phases et un transfert de chaleur avec la phase solvant régénérée circulant dans ladite première chambre.

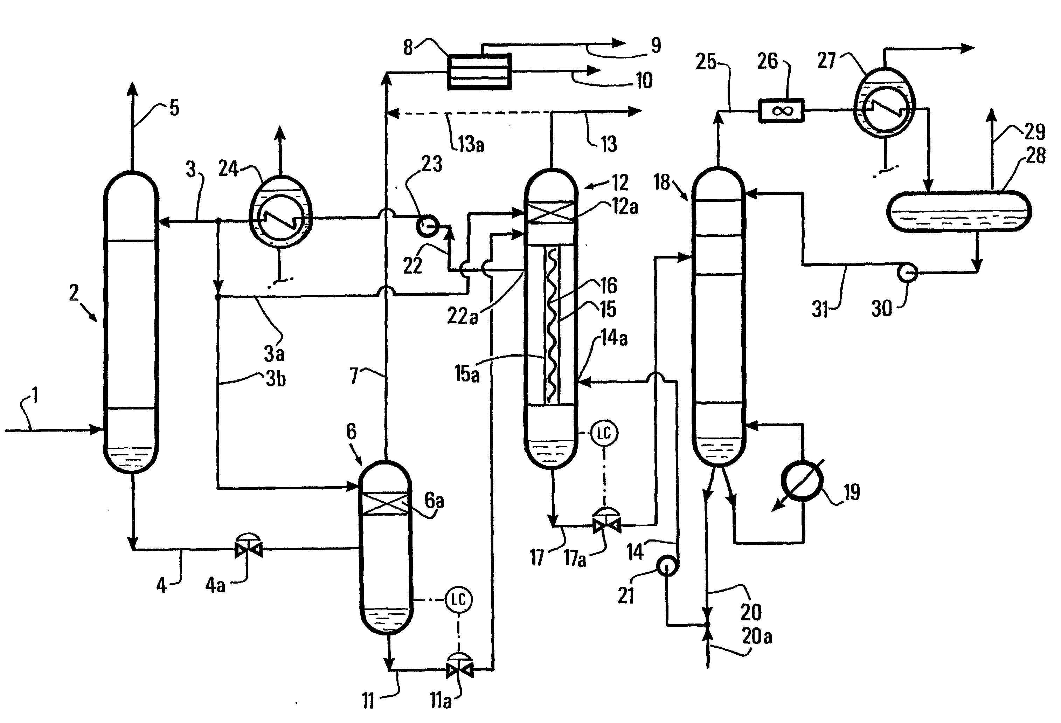

L'invention sera mieux comprise au vu de la figure ci-jointe illustrant de manière schématique le procédé et le dispositif selon l'invention.

Du gaz naturel à une température de -20°C sous une pression P₂=70 bar contenant du méthane, une faible quantité d'éthane et de propane, ainsi qu'une quantité substantielle de dioxyde de carbone et d'hydrogène sulfuré est introduit dans la partie inférieure d'un absorbeur 2 par une ligne 1. Cet absorbeur contient un garnissage d'éléments structurés formés par exemple par des toiles, des tricots ou des tôles pouvant être perforées, correspondant à 5 à 20 étages théoriques.

Le gaz naturel est lavé à contre courant par une phase solvant recyclée et réfrigérée contenant 70 % de méthanol et 30 % d'eau qui est introduite par une ligne 3 dans la partie supérieure de l'absorbeur. Tout l'hydrogène sulfuré, la majeure partie du dioxyde de carbone et une faible quantité d'hydrocarbures sont absorbés par le courant liquide froid en raison de leurs solubilités dans la solution de solvant aux conditions dans l'absorbeur.

On récupère en tête de l'absorbeur par une ligne 5 un gaz hydrocarboné épuré, sensiblement à la même température et à la même pression que celles à l'entrée du gaz naturel et qui contient moins de 3 ppm en volume de H₂S et une quantité prédéterminée de CO₂, en général moins de 2 % en volume.

Une ligne 4, à l'extrémité inférieure de l'absorbeur récupère une première phase liquide comprenant le solvant, les gaz acides et des hydrocarbures restants à une température sensiblement supérieure à celle de l'entrée et l'introduit à l'entrée d'un séparateur 6 intermédiaire (ballon flash) après que cette phase liquide ait été détendue à une pression P₆ au moyen d'une vanne de contrôle de niveau 4a en amont du séparateur, il en résulte une chute de température de la solution de quelques degrés, par exemple de 5°C. Une section de lavage 6a des gaz, disposée dans la partie supérieure du séparateur 6 comporte des éléments de garnissage en vrac, anneaux Pall ou Raschig par exemple, sur lesquels circule une partie de la phase solvant régénérée et réfrigérée introduite par une ligne 3b connectée à la ligne 3 de recyclage.

Une phase gazeuse froide dite gaz de flash est récupérée en tête du séparateur 6 par une ligne 7 à une pression d'environ 20 à 30 bar. Elle peut être purifiée dans au moins un module 8 de séparation par perméation sur membrane, type Medal (Air liquide, France) d'où un perméat riche en H₂S et en CO₂ peut être récupéré à plus faible pression par une ligne 9 et un rétentat riche en hydrocarbures, par une ligne 10. Ce gaz acide peut être combiné avec l'effluent final acide qui sera introduit dans une unité Claus de traitement d'effluents soufrés. Le courant hydrocarboné, en revanche, peut être récupéré à une pression sensiblement la même que celle qui règne dans le séparateur intermédiaire (6) et utilisé comme fuel gaz.
La phase gazeuse sortant du séparateur (6) par la ligne 7 peut aussi être recomprimée et remélangée au flux de gaz circulant dans la ligne 1.

On récupère par ailleurs en fond du séparateur intermédiaire, par une ligne 11 une phase liquide froide, à -20°C par exemple, que l'on détend grâce à une vanne de contrôle de niveau 11a, et que l'on envoie dans la partie supérieure d'une colonne-échangeur thermique 12 à double chambre sensiblement verticale à une pression suffisamment élevée P₁₂ pour libérer un courant gazeux acide riche en CO₂ et en hydrocarbures restants et éviter la libération de H₂S dans ce courant.

Cette colonne-échangeur comprend en tête une section de lavage 12a identique à celle du séparateur intermédiaire. Une partie de la phase solvant réfrigérée et régénérée est introduite au-dessus de cette section par une ligne 3a. La phase liquide froide est introduite sous la section de lavage.

La partie centrale de la colonne-échangeur comporte une section 16 d'échange de chaleur indirect avec une calandre à la base de laquelle est introduite latéralement par une ligne 14 une phase solvant chaude à 100°C par exemple destinée à être recyclée vers l'absorbeur 2. Celle-ci échange de la chaleur avec la phase liquide froide qui est introduite et circule dans une pluralité de tubes 15 sensiblement verticaux et parallèles. Chacun de ces tubes peut être garni d'un élément de garnissage par exemple Hitram ou équivalent, qui est dessiné pour augmenter les transferts de chaleur et de matière. D'une sortie supérieure latérale de la calandre, une ligne 22 reliée à une pompe 23 alimente en phase solvant régénérée partiellement refroidie un échangeur thermique réfrigérant 24 connecté à la partie supérieure de l'absorbeur 2 par une ligne 3.

Le courant gazeux sortant par une ligne 13 en tête de la colonne-échangeur à une température par exemple de -10°C sous 15 bar comprend de la vapeur froide détendue mélangée à de la vapeur provenant du chauffage indirect dans les tubes proprement dit de l'échangeur thermique 16 ; ce courant gazeux est un mélange contenant sensiblement tous les hydrocarbures restants et la majeure partie du dioxyde de carbone et il peut être utilisé comme fluide de réinjection en récupération assistée des hydrocarbures.

Ce mélange peut aussi être introduit par une ligne 13a dans le module 8 de séparation à membrane pour y être purifié. En fond de la colonne-échangeur thermique, une ligne 17 récupère une deuxième phase liquide chauffée contenant le solvant, la majeure partie de l'hydrogène sulfuré, une mineure partie de dioxyde de carbone initialement présents et l'introduit dans la partie supérieure d'une colonne 18 de distillation, via une vanne de détente 17a, destinée à régénérer la phase solvant. Cette colonne de distillation opère à une pression d'entrée P₁₈ légèrement supérieure à celle d'une unité Claus qui récupère l'effluent gazeux de tête de distillation, par exemple, à une pression de l'ordre de 2 bar. Cet effluent de tête gazeux contenant la majeure partie de l'hydrogène sulfuré et le dioxyde de carbone restant ainsi que du solvant est évacué par une ligne 25, traverse successivement un condenseur 26 refroidi à l'air ou à l'eau, et un condenseur réfrigéré 27, avant de se condenser dans une enceinte de condensation 28. Une ligne 31 connectée à la base de cette enceinte, introduit en tant que reflux, via une pompe 30 de reflux, une phase liquide contenant du solvant dans la partie supérieure de la colonne de distillation 18. En tête de l'enceinte 28, on récupère par une ligne 29 un courant gazeux acide et sec contenant de hydrogène sulfuré, et du dioxyde de carbone et une concentration, dans ce courant gazeux, d'hydrocarbures inférieure à 2 %, ce qui permet de traiter ce courant gazeux comme une charge adéquate pour un traitement d'élimination complète de l'H₂S par le procédé Claus.

La phase solvant est régénérée par chauffage à une température appropriée, généralement inférieure à 150°C, du fond de colonne par un rebouilleur 19 utilisant un fluide thermique à bas niveau comme de l'eau chaude ou de la vapeur résultant de l'incinération de déchets.

La phase solvant liquide régénérée et chaude est évacuée par une ligne 20 à la partie inférieure de la colonne 18 de distillation et est envoyée par une pompe 21 de recyclage et une ligne 14 dans l'entrée 14a inférieure de la calandre 16 de l'échangeur thermique du séparateur 12. Du solvant pur peut être rajouté par une ligne 20a dans la ligne 20. La phase solvant régénérée et partiellement refroidie qui sort de la calandre par la sortie 22a et la ligne 22, est ensuite recyclée vers l'absorbeur 2, via la pompe 23 et l'échangeur réfrigérant 24, par la ligne 3.

L'invention sera mieux comprise au vu de l'exemple suivant qui illustre un mode préféré de réalisation, les références étant celles de la figure.

Un gaz acide froid à -23°C sous 52,3 bar absolu, ayant la composition suivante (tableau I) est introduit dans l'absorbeur 2 et mis en contact à contre-courant avec 6884 kmoles d'une solution de 85 % poids de méthanol dans l'eau à la même température et à la même pression.

**Tableau I**

| Composé | ligne 1 10³ moles/heure | ligne 5 10³ moles/heure |
|---|---|---|
| N₂ | 175,0 | 168,7 |
| H₂S | 54,0 | 0,0 |
| CO₂ | 1242,0 | 33,0 |
| CH₄ | 1465,0 | 1337,4 |
| C₂H₆ | 183,0 | 124,5 |
| C₃H₈ | 3,5 | 0,9 |
| | | |
| Total | 3122,5 | 1664,5 |

Le gaz épuré (ligne 5) a la composition suivante (tableau I). La première phase liquide riche en solvant à une température de -6°C (ligne 4) est détendue à travers la vanne de contrôle de niveau 4a et introduite à -8°C et sous 30 bar absolus dans le séparateur intermédiaire 6.

Le gaz de flash récupéré en tête (ligne 7) a la composition suivante décrite dans le tableau II. Ce gaz de flash peut être purifié sur une membrane de perméation 8 (type : Medal par exemple, commercialisé par Air Liquide), ce qui permet de récupérer un effluent gazeux (ligne 10) à 90 % d'hydrocarbures utilisable comme fuel gaz et un perméat enrichi en gaz acides (ligne 9) dont les compositions sont les suivantes (tableau II).

**Tableau II**

| Composés | ligne 7 10³ moles/h | ligne 9 10³ moles/h | ligne 10 10³ moles/h |
|---|---|---|---|
| N₂ | 4,80 | 0,800 | 4,000 |
| H₂S | 1,00 | 0,996 | 0,004 |
| CO₂ | 99,00 | 90,570 | 8,430 |
| CH₄ | 71,00 | 8,000 | 63,000 |
| C₂H₆ | 13,00 | 0,400 | 12,600 |
| C₃H₈ | 0,30 | 0,000 | 0,300 |
| CH₃OH | 0,16 | 0,100 | 0,060 |
| | | | |
| Total | 189,26 | 100,866 | 88,394 |

La phase liquide (ligne 11) contenant la phase solvant et les gaz acides restants à -8°C sous 30 bar absolus est détendue dans une vanne de contrôle de niveau à 15 bar absolus et introduite en tête de la colonne-échangeur thermique 12 à tubes et à calandre. L'effluent de tête en résultant a une température de -10°C à 15 bar absolus (ligne 13) et a la composition suivante (tableau III).

**Tableau III**

| Composés | ligne 13 10³ moles/heure | ligne 29 10³ moles/heure |
|---|---|---|
| N₂ | 1,30 | 0,2 |
| H₂S | 3,00 | 50,0 |
| CO₂ | 1060,00 | 50,0 |
| CH₄ | 56,00 | 0,6 |
| C₂H₆ | 45,00 | 0,5 |
| C₃H₈ | 1,30 | 1,0 |
| CH₃OH | 1,06 | 1,0 |
| | | |
| Total | 1167,66 | 103,3 |

La phase liquide en sortie de la colonne-échangeur thermique est récupérée (ligne 17) à environ 80°C sous 15 bar absolus et détendue grâce à une vanne de contrôle de niveau 17a à 2 bar absolus, avant d'être introduite dans la colonne de distillation 18. Celle-ci a une section de rectification de 2 étages théoriques constitué par un garnissage structuré. Le nombre d'étages théoriques dans la colonne de distillation est de 5.

L'effluent gazeux acide enrichi en H₂S qui est récupéré en tête de colonne après réfrigération et condensation de la phase solvant, a la composition décrite dans le tableau III ci-devant (ligne 29). Il peut être utilisé comme charge d'unité Claus, étant donné sa très faible teneur en hydrocarbures.

Le bouilleur à eau chaude, en fond de colonne permet d'atteindre une température de 100°C sous 2,5 bar absolus. Le solvant régénéré contient moins de 1 ppm de H₂S.

Le bilan matière réalisé à partir de cet exemple (ligne 1 et lignes 5, 7, 13, 29), le méthanol étant exclu, montre tout l'intérêt de ce procédé.

On a enfin constaté que l'énergie nécessaire au rebouillage de la phase solvant dans la colonne de distillation était moins importante ainsi que celle nécessaire à la condensation de la phase gazeuse acide et donc que le procédé était très économique.

## Revendications

1. Procédé de traitement d'une charge gazeuse contenant un mélange d'hydrocarbures, de l'hydrogène sulfuré et éventuellement du dioxyde de carbone qui comporte:
- une étape a) de mise en contact de la charge à une pression P₂ avec une partie au moins d'une phase solvant polaire recyclée renfermant au moins 50 % d'un solvant dans au moins une zone (2) d'absorption, le dit solvant étant un composé organique non-hydrocarbure normalement liquide autre que l'eau, le dit solvant étant au moins partiellement miscible à l'eau et distillable à une température inférieure à celle de distillation de l'eau, de manière à obtenir un gaz épuré contenant la majeure partie des hydrocarbures et ne contenant sensiblement pas d'hydrogène sulfuré et une première phase liquide comprenant le solvant, les hydrocarbures restants, sensiblement tout l'hydrogène sulfuré et éventuellement sensiblement tout le dioxyde de carbone;
- une étape (b), dans laquelle on détend et on chauffe la première phase liquide à une pression P₁₂ inférieure à la pression P₂ dans au moins une colonne-échangeur thermique (12) verticale ou inclinée, qui échange indirectement dans sa partie interne à contre-courant de la chaleur avec la phase solvant régénérée et chauffée provenant de l'étape (c) ci-dessous, et dans laquelle l'on récupère en tête une deuxième phase gazeuse contenant sensiblement tous les hydrocarbures restants et la majeure partie du dioxyde de carbone, si la charge gazeuse en contient, et en fond une deuxième phase liquide chauffée contenant le solvant, la majeure partie de l'hydrogène sulfuré et éventuellement une mineure partie du dioxyde de carbone;
- une étape c) de régénération de la phase solvant, dans laquelle on effectue la régénération de la phase solvant en faisant circuler la deuxième phase liquide, après l'avoir éventuellement détendue, dans au moins une colonne de distillation (18) à une pression P₁₈ au plus égale à la pression P₁₂ du séparateur-échangeur thermique (12), et dans laquelle l'on récupère d'une part, en tête, une partie au moins d'une troisième phase gazeuse acide contenant la majeure partie de l'hydrogène sulfuré et éventuellement le dioxyde de carbone restant, et en fond de colonne, la phase solvant régénérée et chauffée;
- une étape d) de recyclage et de réfrigération de la phase solvant régénérée dans la zone d'absorption (2);
le procédé comportant en outre la réfrigération dans la partie interne de la colonne-échangeur thermique de la phase solvant régénérée et chauffée et la récupération de la phase solvant que l'on recycle sous pression dans la zone d'absorption (2) après l'avoir réfrigérée selon l'étape d).

2. Procédé selon la revendication 1 dans lequel on réalise avant l'étape b) une détente préliminaire de la première phase liquide à une pression P₆ inférieure à la pression P₂ de la zone d'absorption dans au moins un séparateur intermédiaire (6) et l'on récupère en tête une phase gazeuse intermédiaire, dite gaz de flash comprenant essentiellement des hydrocarbures, une quantité mineure d'hydrogène sulfuré et éventuellement du dioxyde de carbone et en fond une phase liquide contenant le solvant, éventuellement la majeure partie du dioxyde de carbone et sensiblement tout l'hydrogène sulfuré que l'on traite selon l'étape b).

3. Procédé selon la revendication 2, dans lequel la pression P₁₂ dans la colonne-échangeur thermique (12) est au plus égale à la pression P₆ dans le séparateur intermédiaire (6).

4. Procédé selon la revendication 2, dans lequel la pression P₁₂ dans la colonne-échangeur thermique (12) est supérieure à la pression P₆ dans le séparateur (6) intermédiaire.

5. Procédé selon l'une des revendications 1 à 4, dans lequel la pression P₁₈ dans la colonne de distillation (18) est inférieure à la pression P₁₂ dans le séparateur-échangeur thermique.

6. Procédé selon l'une des revendications 1 à 5 dans lequel la pression partielle en hydrogène sulfuré et éventuellement en dioxyde de carbone est supérieure à 3 bar et de préférence supérieure à 10 bar.

7. Procédé selon l'une des revendications 1 à 6 dans lequel on effectue la détente de la première phase liquide provenant de l'étape a) par au moins une vanne ou une turbine de détente à une pression telle que l'on minimise la quantité d'hydrogène sulfuré dans l'effluent gazeux de tête.

8. Procédé selon la revendication 1 dans lequel on fait circuler la deuxième phase gazeuse à travers un séparateur à membrane de perméation 8, de façon à récupérer un perméat enrichi en hydrogène sulfuré et un rétentat gazeux enrichi en hydrocarbures et appauvri en hydrogène sulfuré.

9. Procédé selon la revendication 2 dans lequel on fait circuler le gaz de flash à travers un séparateur à membrane de perméation de façon à récupérer un perméat enrichi en hydrogène sulfuré et un rétentat gazeux enrichi en hydrocarbures et appauvri en hydrogène sulfuré.

10. Procédé selon l'une des revendications 1 à 8 dans lequel on réalise une étape de lavage de la deuxième phase gazeuse avec une partie de la phase solvant régénérée et réfrigérée dans une zone de lavage située en tête du séparateur-échangeur thermique.

11. Procédé selon la revendication 2 dans lequel on réalise une étape de lavage du gaz de flash avec une partie de la phase solvant régénérée et réfrigérée en tête du séparateur intermédiaire.

12. Procédé selon l'une des revendications 1 à 11 dans lequel la colonne-échangeur thermique comprend un échangeur de chaleur à tubes et à calandre ou un échangeur thermique à plaques.

13. Procédé selon l'une des revendications 1 à 12 dans lequel le gaz est introduit dans la zone d'absorption à une pression inférieure à 150 bar et à une température de +10 à -100°C.

14. Procédé selon la revendication 2 dans lequel la pression dans le séparateur intermédiaire (6) est de 10 à 50 bar, la pression dans la colonne-échangeur thermique (12) est de 8 à 40 bar et la pression dans la colonne de distillation est comprise entre 2 et 6 bar.

15. Procédé selon l'une des revendications 1 à 14, dans lequel le solvant est choisi dans le groupe formé par le méthanol, éthanol, méthylpropyléther, éthylpropyléther, dipropyléther, méthyltertiobutyléther, diméthoxyméthane, méthoxyéthanol et propanol.

16. Procédé selon l'une des revendications 1 à 15 dans lequel on introduit la première phase liquide entre une zone de lavage et l'échangeur thermique (15).

17. Dispositif de traitement d'une charge gazeuse contenant des hydrocarbures, de l'hydrogène sulfuré et éventuellement du dioxyde de carbone comportant au moins un absorbeur (2) contenant un garnissage ou des plateaux, une ligne (1) d'alimentation en la charge en fond de l'absorbeur et une ligne d'évacuation (4) d'une première phase liquide en fond de l'absorbeur, une ligne (5) d'évacuation de la charge épurée en tête de l'absorbeur et une ligne (22) d'alimentation d'une phase solvant en tête de l'absorbeur, le dispositif comprenant:
- au moins un moyen de détente (4a) disposé sur la ligne d'évacuation (4) de la première phase liquide en amont d'une colonne-échangeur thermique (12) décrite ci-après,
- au moins une colonne-échangeur thermique (12) à double chambre sensiblement verticale ou oblique ayant une entrée latérale supérieure reliée au moyen de détente (4a), comportant intérieurement des moyens d'échange thermique (16) indirect adaptés à refroidir une phase solvant régénérée dans une première chambre et à chauffer et séparer la première phase liquide dans une deuxième chambre, ladite colonne-échangeur thermique comportant en tête une ligne d'évacuation (13) d'une deuxième phase gazeuse enrichie en hydrocarbures et en fond une ligne d'évacuation (17) d'une deuxième phase liquide, lesdits moyens d'échange thermique (15) comportant une entrée latérale inférieure (14a) de phase de solvant régénéré et chaud dans la première chambre et une sortie latérale supérieure (22a) de phase de solvant régénéré et refroidi de ladite première chambre;
- au moins une colonne de distillation (18) ayant une entrée supérieure connectée à la ligne d'évacuation (17) de la deuxième phase liquide, une sortie supérieure délivrant une troisième phase gazeuse acide et une sortie inférieure délivrant la phase solvant régénérée, reliée à l'entrée latérale des moyens d'échange thermique; et
- au moins un moyen de recyclage (20, 21) de la phase solvant régénérée en fond de la colonne de distillation (18) et au moins un moyen de réfrigération (24) de la phase solvant régénérée, connecté à la sortie latérale supérieure desdits moyens d'échange thermique (15) et à l'absorbeur (2),

18. Dispositif selon la revendication 17 dans lequel au moins un séparateur intermédiaire (6) est interposé entre ledit moyen de détente et la colonne-échangeur thermique (12), ledit séparateur (6) comprenant une ligne d'évacuation (7) d'un gaz de flash et une ligne d'évacuation (11) d'une phase liquide connectée à l'entrée latérale supérieure de la colonne-échangeur thermique.

19. Dispositif selon la revendication 18, dans lequel les moyens d'échange thermique sont un échangeur thermique à tubes et à calandre ou un échangeur à plaques.

20. Dispositif selon l'une des revendications 17 à 19 dans lequel la partie supérieure de la colonne-échangeur thermique comprend une section (12a) de lavage et des moyens d'alimentation en phase solvant (3a) régénérée et réfrigérée.

21. Dispositif selon l'une des revendications 18 ou 19 dans lequel la partie supérieure du séparateur intermédiaire comprend une section (6a) de lavage et des moyens d'alimentation en phase solvant (3b) régénérée et réfrigérée.

22. Dispositif selon la revendication 17 dans lequel au moins un séparateur à membrane de perméation est disposé sur la ligne (13) d'évacuation de la deuxième phase gazeuse, ledit séparateur comprenant une ligne d'évacuation d'un perméat et une ligne d'évacuation d'un rétentat.

23. Dispositif selon l'une des revendications 18, 19 ou 21 dans lequel au moins un séparateur (8) à membrane de perméation est disposé sur la ligne d'évacuation (7) de gaz de flash, ledit séparateur comprenant une ligne d'évacuation d'un perméat et une ligne d'évacuation d'un rétentat.

## Patentansprüche

1. Verfahren zum Behandeln einer ein Gemisch aus Kohlenwasserstoffen, Schwefelwasserstoff und gegebenenfalls Kohlendioxid enthaltenden gasförmigen Charge, die umfasst:
- eine Stufe a) zur Kontaktierung der Charge bei einem Druck P₂ mit wenigstens einem Teil einer Phase rezyklierten polaren Lösungsmittels, das wenigstens 50 % eines Lösungsmittels in wenigstens einer Absorptionszone (2) einschließt, wobei dieses Lösungsmittel eine organische normalerweise flüssige Nicht-Kohlenwasserstoffverbindung, ausgenommen Wasser, ist, dieses Lösungsmittel wenigstens partiell mit Wasser mischbar und bei einer Temperatur unterhalb der der Destillation des Wassers destillierbar ist, derart, dass man ein gereinigtes Gas erhält, das den größeren Teil der Kohlenwasserstoffe und im wesentlichen keinen Schwefelwasserstoff enthält, sowie eine erste flüssige Phase, die das Lösungsmittel, die verbleibenden Kohlenwasserstoffe, im wesentlichen den gesamten Schwefelwasserstoff und gegebenenfalls im wesentlichen das gesamte Kohlendioxid umfasst, aufweist;
- eine Stufe (b), in der man die erste flüssige Phase bei einem Druck P₁₂ unterhalb des Druckes P₂ in wenigstens einer Kolonnen-Wärmeaustauscher-Anordnung (12), die vertikal oder geneigt ist, entspannt und erwärmt, wobei diese indirekt in ihrem Teil innerhalb des Gegenstroms Wärme mit der Phase regenerierten und erwärmten Lösungsmittels, das aus der nachstehend genannten Stufe (c) stammt, austauscht und in der man am Kopf eine zweite Gasphase gewinnt, die im wesentlichen sämtliche verbleibenden Kohlenwasserstoffe sowie den größeren Teil des Kohlendioxids enthält, wenn die Charge davon enthält, und man am Boden eine zweite flüssige das Lösungsmittel enthaltende erwärmte Phase, die den größeren Teil des Schwefelwasserstoffs und gegebenenfalls einen kleineren Teil des Kohlendioxids enthält, gewinnt;
- eine Stufe c) der Regenerierung der Lösungsmittelphase, in der man die Regenerierung der Lösungsmittelphase vornimmt, indem man die zweite flüssige Phase, nachdem man sie gegebenenfalls entspannt hat, in wenigstens einer Destillationskolonne (18) bei einem Druck P₁₈ höchstons glelch dem Druck P₁₂ des Separator-Wärmeaustauschers (12) entspannt hat und in der man einerseits am Kopf wenigstens einen Teil einer dritten gasförmigen sauren Phase, die den größeren Teil des Schwefelwasserstoffs enthält und gegebenenfalls das verbleibende Kohlendioxid und am Boden der Kolonne die regenerierte und erwärmte Lösungsmittelphase gewinnt;
- eine Stufe d) der Rezyklierung und der Kühlung der regenerierten Lösungsmittelphase in der Absorptionszone (2);
wobei das Verfahren im übrigen die Kühlung im Innenteil der Anordnung aus Kolonne-Wärmeaustauscher für die regenerierte und erwärmte Lösungsmittelphase und die Rückgewinnung der Lösungsmittelphase umfasst, die man unter Druck in die Absorptionszone (2), nachdem man sie in Stufe d) gekühlt hat, rezykliert.

2. Verfahren nach Anspruch 1, bei dem man vor der Stufe b) eine vorherige Entspannung der flüssigen ersten Phase bei einem Druck P₆, kleiner als der Druck P₂, der Absorptionszone in wenigstens einem Zwischenseparator (6) durchführt und man am Kopf eine gasförmige Zwischenphase, sog. "flash"-Gas gewinnt, welches im wesentlichen Kohlenwasserstoffe, einen kleineren Teil von Schwefelwasserstoff und gegebenenfalls Kohlendioxid umfasst und am Boden eine flüssige Phase, die das Lösungsmittel, gegebenenfalls den größeren Teil des Kohlendioxids und im wesentlichen den gesamten Kohlenwasserstoff enthält, den man gemäß Stufe b) behandelt.

3. Verfahren nach Anspruch 2, bei dem der Druck P₁₂ in der Kolonnen-Wärmeaustauscheranordnung (12) höchstens gleich dem Druck P₆ im Zwischenseparator (6) ist.

4. Verfahren nach Anspruch 2, bei dem der Druck P₁₂ in der Kolonnen-Wärmeaustauscheranordnung (12) größer als der Druck P₆ im Zwischenseparator (6) ist.

5. Verfahren nach einem dor Ansprüche 1 bis 4, bei dem der Druck P₁₈ in der Destillationskolonne (18) kleiner als der Druck P₁₂ in dem Separator-Wärmeaustauscher ist.

6. Verfahren nach einem der Ansprüche 1 bis 5, bei dem der Partialdruck im Schwefelwasserstoff und gegebenenfalls im Kohlendioxid über 3 bar und bevorzugt über 10 bar liegt.

7. Verfahren nach einem der Ansprüche 1 bis 6, bei dem man die Entspannung der ersten flüssigen aus der Stufe a) stammenden Phase durch wenigstens ein Ventil oder eine Entspannungsturbine bei einem Druck derart durchführt, dass man die Menge an Schwefelwasserstoff im gasförmigen Kopfabstrom minimiert.

8. Verfahren nach Anspruch 1, bei dem man die zweite gasförmige Phase durch einen Separator mit Permeationsmembran 8 derart strömen lässt, dass ein an Schwefelwasserstoff angereichertes Permeat und ein gasförmiges an Kohlenwasserstoffen angereichertes und an Schwefelwasserstoff verarmtes Retentat gewonnen wird.

9. Verfahren nach Anspruch 2, bei dem man das "flash"-Gas durch einen Separator mit Permeationsmembran derart strömen lässt, dass ein an Schwefelwasserstoff angereichertes Permeat und ein an Kohlenwasserstoff angereichertes und an Schwefelwasserstoff verarmtes Retentat gewonnen wird.

10. Verfahren nach einem der Ansprüche 1 bis 8, bei dem man eine Stufe des Waschens der zweiten Gasphase mit einem Teil der regenerierten und gekühlten Lösungsmittelphase in einer Waschzone realisiert, die am Kopf des Separator-Wärmeaustauschers angeordnet ist.

11. Verfahren nach Anspruch 2, bei dem man eine Waschstufe für das "flash"-Gas mit einem Teil der regenerierten und gekühlten Lösungsmittelphase am Kopf des Zwischenseparators durchführt.

12. Verfahren nach einem der Ansproche 1 bis 11, bei dem die Kolonnen-Wärmeaustauscheranordnung einen Röhrenwärmeaustauscher mit Kalander oder einen Plattenwärmeaustauscher umfasst.

13. Verfahren nach einem der Ansprüche 1 bis 12, bei dem das Gas in die Absorptionszone bei einem Druck unterhalb 150 bar und einer Temperatur von +10 bis -100°C eingeführt wird.

14. Verfahren nach Anspruch 2, bei dem der Druck im Zwischenseparator (6) zwischen 10 und 50 bar, der Druck in der Kolonnen-Wärmeaustauscheranordnung (12) bei 10 bis 50 bar und der Druck in der Kolonnen-Wärmeaustauscheranordnung (12) bei 8 bis 40 bar und der Druck in der Destillationskolonne zwischen 2 und 6 bar liegt.

15. Verfahren nach einem der Ansprüche 1 bis 14, bei dem das Lösungsmittel gewählt ist aus der Gruppe, die gebildet ist durch Methanol, Ethanol, Methylpropylether, Ethylpropylether, Dipropylether, Methyltertbuthylether, Dimethoxymethan, Methoxyethanol und Propanol.

16. Verfahren nach einem der Ansprüche 1 bis 15, bei dem man die erste flüssige Phase zwischen einer Waschzone und dem Wärmeaustauscher (15) einführt.

17. Vorrichtung zur Behandlung einer gasförmigen Kohlenwasserstoffe, Schwefelwasserstoffe und gegebenenfalls Kohlendioxid enthaltenden Phase, die wenigstens einen Absorber (2) umfasst, der eine Auskleidung oder Platten enthält, eine Leitung (1) zur Speisung mit Charge am Boden des Absorbers und eine Leitung zum Abzug (4) einer ersten flüssigen Phase am Boden des Absorbers, eine Leitung (5) zum Abzug der gereinigten Charge am Kopf des Absorbers und eine Leitung (22) zur Speisung einer Lösungsmittelcharge zum Kopf des Absorbers, wobei die Vorrichtung umfasst:
- wenigstens ein Entspannungsmittel (4a), das auf der Abzugsleitung (4) für die erste flüssige Phase vor einer unten beschriebenen Kolonnen-Wärmeaustauscheranordnung (12) angeordnet ist,
- wenigstens eine Kolonnen-Wärmeaustauscheranordnung (12) mit Doppelkammer, die im wesentlichen vertikal oder schräg ist und über einen seitlichen oberen Eintritt, verbunden mit dem Entspannungsmittel (4a) verfügt und innen indirekte Wärmeaustauschermittal (16) umfasst, die so ausgelegt sind, dass sie eine regenerierte Lösungsmittelphase in einer ersten Kammer kühlen und die erste flüssige Phase in einer zweiten Kammer erwärmen und trennen, wobei die Kolonnen-Wärmeaustauscheranordnung am Kopf eine Abzugsleitung (13) für eine zweite gasförmige Phase umfasst, die an Kohlenwasssrstoffen angereichert ist und am Boden eine Abzugsleitung (17) für eine zweite flüssige Phase, wobei die Wärmeaustauschermittel (15) einen seitlichen unteren Eingang (14a) für die regenerierte und heiße Lösungsmittelphase in die erste Kammer und einen seitlichen oberen Austritt (22a) für die regenerierte und gekühlte Lösungsmittelphase aus dieser ersten Kammer umfasst;
- wenigstens eine Destillationskolonne (18) mit einem oberen Eingang, der mit der Abzugsleitung (17) für die zweite flüssige Phase verbunden ist, einen oberen Ausgang, der eine dritte gasförmige saure Phase liefert und einen unteren Ausgang, der die regenerierte Lösungsmittelphase liefert und mit dem seitlichen Eintritt der Wärmeaustauschermittel verbunden ist; und
- wenigstens eine Rezyklierungsmittel (20, 21) für die regenerierte Lösungsmittelphase am Boden der Destillationskolonne (18) und wenigstens ein Kühlmittel (24) für die regenerierte Lösungsmittelphase, das mit dem seitlichen oberen Ausgang dieser Wärmeaustauscharmittel (15) und dem Absorber (2) verbunden ist.

18. Vorrichtung nach Anspruch 17, bei der wenigstens ein Zwischenseparator (6) zwischen dieses Entspannungsmittel und die Kolonnen-Wärmeaustauscheranordnung (12) zwischengeschaltet ist und der Separator (6) eine Abzugsleitung (7) für ein "flash"-Gas und eine Abzugsleitung (11) für eine flüssige Phase, verbunden mit dem oberen seitlichen Eingang der Kolonnen-Wärmeaustauscheranordnung, umfasst.

19. Vorrichtung nach Anspruch 18, bei der die Wärmeaustauschermittel ein Wärmeaustauscher mit Röhren und mit Kalander oder ein Wärmeaustauscher mit Platten sind.

20. Vorrichtung nach einem der Ansprüche 17 bis 19, bei der der obere Teil der Kolonnen-Wärmeaustauscheranordnung einen Waschabschnitt (12a) und Mittel zur Speisung (3a) mit der regenerierten und gekühlten Lösungsmittelphase umfasst.

21. Vorrichtung nach einem der Ansprüche 18 oder 19, bei der ein oberer Teil des Zwischenseparators einen Waschabschnitt (6a) und Mittel zur Speisung mit der regenerierten gekühlten Lösungsmittelphase (3b) umfasst.

22. Vorrichtung nach Anspruch 17, bei der wenigstens ein Permeationsmembranseparator an der Abzugsleilung (13) für die zweite gasförmige Phase angeordnet ist und dieser Separator eine Abzugsleitung für ein Permeat sowie eine Abzugsleitung für ein Retentat umfasst.

23. Vorrichtung nach einem der Ansprüche 18, 19 oder 21, bei der wenigstens ein Permeationsmembranseparator (8) an der Abzugsleitung (7) für das "flash"-Gas angeordnet ist und dieser Separator eine Abzugsleitung für ein Permeat und eine Abzugsleitung für ein Retentat umfasst.

## Claims

1. A process for the treatment of a gaseous feed containing a mixture of hydrocarbons, hydrogen sulphide and possibly carbon dioxide, comprising:
- a step (a) for contact at a pressure P₂ with at least a portion of a recycled polar solvent phase containing at least 50% of a solvent in at least one absorption zone (2), said solvent being a non-hydrocarbon organic solvent which is normally liquid other than water, said solvent being at least partially miscible with water and distillable at a temperature which is lower than that of the distillation of water, to obtain a purified gas containing the major portion of the hydrocarbons and containing substantially no hydrogen sulphide and a first liquid phase comprising the solvent, the remaining hydrocarbons, substantially all the hydrogen sulphide and possibly substantially all the carbon dioxide;
- a step (b), in which the first liquid phase is depressurized to a pressure P₁₂ which is lower than pressure P₂ and heated in at least one column - heat exchanger 12 which is vertical or inclined, which indirectly exchanges heat in its internal portion with a counter-current of the heated regenerated solvent phase from step (c) and a second in which gaseous phase is recovered overhead which contains substantially all the remaining hydrocarbons and the major portion of any carbon dioxide contained in the gaseous feed, and a second heated liquid phase is recovered from the bottom which contains the solvent, the major portion of the hydrogen sulphide and possibly a minor portion of any carbon dioxide;
- a step (c) for regenerating the solvent phase in which the solvent phase is regenerated by circulating the second liquid phase, after depressurizing if necessary, in a distillation column (18) at a pressure P₁₈ which is no greater than pressure P₁₂ in the separator - heat exchanger (12), and at least a portion of a third acid gas phase containing the major portion of the hydrogen sulphide and any remaining carbon dioxide is recovered overhead, and the regenerated heated solvent phase is recovered from the bottom
- a step (d) for recycling and cooling the solvent regenerated in the absorption zone (2);
the process further comprising a step in which the heated regenerated solvent phase is cooled in the internal portion of the column - heat exchanger and the solvent phase is recovered which is recycled under pressure to the absorption zone (2) after cooling in accordance with step (d).

2. A process according to claim 1, in which before step (b), preliminary depressurization of the first liquid phase to a pressure P₆ which is lower than the pressure P₂ in the absorption zone is carried out in at least one intermediate separator (6) from which an intermediate gaseous phase termed the flash gas is recovered overhead, comprising essentially hydrocarbons, a minor quantity of hydrogen sulphide and possibly carbon dioxide, and a liquid phase is recovered from the bottom which contains the solvent, possibly a major portion of any carbon dioxide and substantially all the hydrogen sulphide which is treated in accordance with step (b).

3. A process according to claim 1, in which the pressure P₁₂ in the column - heat exchanger is no higher than the pressure P₆ in the intermediate separator.

4. A process according to claim 2, in which the pressure P₁₂ in the column - heat exchanger (12) is higher than the pressure P₆ in the intermediate separator (6).

5. A process according to any one of claims 1 to 4, in which the pressure P₁₈ in the distillation column (18) is lower than the pressure P₁₂ in the separator - heat exchanger.

6. A process according to any one of claims 1 to 5, in which the partial pressure of hydrogen sulphide and any carbon dioxide is higher than 3 bar, preferably greater than 10 bar.

7. A process according to any one of claims 1 to 6, in which the first liquid phase from step (a) is depressurized by means of at least one depressurizing valve or turbine to a pressure such that the quantity of hydrogen sulphide in the overhead gaseous effluent is minimised.

8. A process according to claim 1, in which the second gaseous phase is circulated through a permeation membrane separator (8) to recover a permeate which is enriched in hydrogen sulphide and a retentate which is enriched in hydrocarbons and depleted in hydrogen sulphide.

9. A process according to the claim 2, in which the flash gas is circulated through a permeation membrane separator to recover a permeate which is enriched in hydrogen sulphide and a gaseous retentate which is enriched in hydrocarbons and depleted in hydrogen sulphide.

10. A process according to any one of claims 1 to 8, in which the second gaseous phase is washed in a washing step with a portion of the regenerated cooled solvent phase in a washing zone located at the head of the separator - heat exchanger.

11. A process according to the claim 2, in which the flash gas is washed in a washing step with a portion of the regenerated and cooled solvent phase at the head of the intermediate separator.

12. A process according to any one of claims 1 to 11, in which the column - heat exchanger comprises a tube and shell heat exchanger or a plate heat exchanger.

13. A process according to any one of claims 1 to 12, in which the gas is introduced into the absorption zone at a pressure of less than 150 bar and at a temperature of +10°C to -100°C.

14. A process according to the claim 2, in which the pressure in the intermediate separator (6) is 10 to 50 bar, the pressure in the column - heat exchanger (12) is 8 to 40 bar and the pressure in the distillation column is in the range 2 bar to 6 bar.

15. A process according to any one of claims 1 to 14, in which the solvent is selected from the group formed by methanol, ethanol, methylpropylether, ethylpropylether, dipropylether, methyltertiobutylether, dimethoxymethane, ethanol, methoxyethanol and propanol.

16. A process according to any one of claims 1 to 15, in which the first liquid phase is introduced between a washing zone and the heat exchanger (15).

17. An apparatus for the treatment of a gaseous feed containing hydrocarbons, hydrogen sulphide and possibly carbon dioxide, comprising:
- at least one absorber (2) containing a packing or plates, a line (1) for supplying a feed to the bottom of the absorber and an evacuation line (4) for a first liquid phase from the bottom of the absorber, an overhead evacuation line (5) for purified feed from the absorber and a line (22) for supplying a solvent phase to the head of the absorber,
the apparatus comprising:
- at least one depressurization means (4a) located in the evacuation line (4) for the first liquid phase upstream of a column - heat exchanger (12) described below;
- at least one column - heat exchanger (12) with a double chamber which is substantially vertical or inclined having an upper side inlet connected to the depressurization means (4a), comprising at its interior indirect heat exchange means (16) for cooling a regenerated solvent phase in a first chamber and for heating and separating the first liquid phase in a second chamber, said column - heat exchanger comprising an overhead evacuation line (13) for a second gaseous phase which is enriched in hydrocarbons and a bottom evacuation line (17) for a second liquid phase, said heat exchange means (15) comprising a lower side inlet (14a) allowing hot regenerated solvent into said first chamber and an upper side outlet (22a) allowing cooled regenerated solvent from said first chamber;
- at least one distillation column (18) having an upper supply inlet connected to the evacuation line (17) for the second liquid phase, an upper outlet delivering a third gaseous acid phase and a lower outlet delivering the regenerated solvent phase, connected to the side inlet of the heat exchange means and at least one recycling means (20, 21) of the regenerated solvent phase at the bottom of the distillation column and at least one means (24) for cooling the regenerated solvent phase connected to the upper side outlet of the heat exchange means and to the absorber (2).

18. An apparatus according to claim 17, In which at least one intermediate separator (6) is interposed between said depressurization valve or the turbine and the column - heat exchanger (12), said separator (6) comprising an evacuation line (7) for a flash gas and an evacuation line (11) for a liquid phase connected to the upper side inlet of the column - heat exchanger.

19. An apparatus according to claim 18, in which the heat exchange means are a shell and tube exchanger or a plate exchanger.

20. An apparatus according to any one of claims 17 to 19, in which the upper portion of the column - heat exchanger comprises a washing section (12a) and means (3a) for supplying regenerated and cooled solvent phase.

21. An apparatus according to any one of claims 18 or 19, in which the upper portion of the intermediate separator comprises a washing section (6a) and means (3b) for supplying regenerated and cooled solvent phase.

22. An apparatus according to claim 17, in which at least one permeation membrane separator is located in line (13) for evacuating the second gaseous phase, said separator comprising an evacuation line for a permeate and an evacuation line for a retentate.

23. An apparatus according to any one of claims 18, 19 or 21, in which at least one permeation membrane separator (8) is located in the flash gas evacuation line (7), said separator comprising an evacuation line for a permeate and an evacuation line for a retentate.
